# EUROPÄISCHE PATENTSCHRIFT

(11) **EP 1 758 770 B1**
(45) Veröffentlichungstag und Bekanntmachung des Hinweises auf die Patenterteilung: **10.11.2010**
(21) Anmeldenummer: 05737884.6
(22) Anmeldetag: 28.04.2005
(51) Int. Cl.: B60R 22/03

(54) **VERSTELLVORRICHTUNG ZUM MOTORISCHEN BEWEGEN EINES SICHERHEITSGURTS IM KRAFTFAHRZEUG SOWIE EINE BEFESTIGUNGSVORRICHTUNG UND EIN VERFAHREN ZUM BEFESTIGEN DER VERSTELLVORRICHTUNG**
ADJUSTING DEVICE FOR THE MOTORIZED MOVEMENT OF A SAFETY BELT IN A MOTOR VEHICLE AND FIXING DEVICE AND METHOD FOR FIXING THE ADJUSTING DEVICE
DISPOSITIF DE REGLAGE POUR LE DEPLACEMENT MOTORISE D'UNE CEINTURE DE SECURITE DANS UN VEHICULE A MOTEUR, DISPOSITIF DE FIXATION ET PROCEDE DE FIXATION DUDIT DISPOSITIF DE REGLAGE

(30) Priorität: 11.06.2004 DE 102004028280
(43) Veröffentlichungstag der Anmeldung: 07.03.2007
(73) Patentinhaber: ROBERT BOSCH GMBH, 70442 Stuttgart (DE)
(72) Erfinder: DANKOWSKI, Konrad, F-67760 Gambsheim (FR); IHLE, Daniel, 77815 Buehl-Altschweier (DE); STROMINSKI, Christine, 77839 Lichtenau (DE)
(86) Internationale Anmeldenummer: PCT/EP2005/051940
(87) Internationale Veröffentlichungsnummer: WO 2005/120909

(56) Entgegenhaltungen:
- EP-B- 0 542 773
- DE-A1- 2 713 172
- DE-A1- 3 102 262
- DE-A1- 3 302 356
- US-A- 4 784 407

## Beschreibung

### Stand der Technik

Die Erfindung betrifft eine Verstellvorrichtung zum motorischen Verstellen eines Sicherheitsgurts im Kraftfahrzeug, sowie eine Befestigungsvorrichtung und ein Verfahren zum Befestigen der Verstellvorrichtung nach der Gattung der unabhängigen Ansprüche.

Mit der EP 0 542 773 B1 ist ein Sicherheitsgurt-Anbietersystem bekannt geworden, bei dem eine elektromotorische Antriebseinheit mittels eines Abtriebsritzels eine Zahnstange in einer Führungshülle in Längsrichtung verschiebt. Dabei erstreckt sich die Führungshülle im wesentlichen über die gesamte Länge der Zahnstange und wird direkt an der Karosserie befestigt. Die Führungshülle ist bei einer solchen Ausführung in der Regel als metallenes Biege-Stanzteil ausgeführt, an dem ein Befestigungsflansch zur Anbindung an die Karosserie angeordnet ist. Die elektrische Antriebseinheit wird dann mit Verbindungselementen ebenfalls am Befestigungsflansch derart befestigt, dass das Abtriebsritzel in die Zahnstange eingreift. Eine solche Verstellvorrichtung weist ein relativ hohes Gewicht auf und ist kostenintensiv in der Fertigung. Die Montage des Sicherheitsgurt-Anbietersystem über mehrere Befestigungspunkte ist dabei von den Toleranzen der Karosserie abhängig

Mit der EP-B-0542773 ist eine Vorrichtung zur motorischen Bewegung eines Sicherheitsgurtes bekannt geworden, bei der eine Öse für den Sicherheitsgurt an einer Zahnstange befestigt ist. Die Zahnstange kämmt mit einem Ritzel, das elektromotorisch angetrieben wird.

Die US-A-4784407 zeigt ein Sicherheitsgurtsystem, bei dem ein Aufnahmeelement des Sicherheitsgurtes in einer karosseriefesten Führung geführt wird. Das Aufnahmeelement wird mittels eines Riemens elektromotorisch verstellt, wozu der elektrische Antrieb eine Riementrommel aufweist, die über ein Schneckengetriebe angetrieben wird.

### Vorteile der Erfindung

Die erfindungsgemäße Verstellvorrichtung zum motorischen Bewegen eines Sicherheitsgurts, sowie eine Befestigungsvorrichtung und ein Verfahren zum Befestigen der Verstellvorrichtung mit den kennzeichnenden Merkmalen der unabhängigen Ansprüche haben den Vorteil, dass durch die Ausformung einer Durchgangsbohrung durch das komplette Getriebegehäuse die Verstellvorrichtung mittels eines einzigen Befestigungspunktes an der Karosserie befestigt werden kann. Dadurch entfällt die Justage des Befestigungsflansches mit seinen mehreren Bohrungen oder Langlöchern bezüglich der Karosserie. Durch das Aufschieben der Verstellvorrichtung auf den gehäusefesten Bolzen vereinfacht sich die Montage erheblich. Dabei entfällt die separate Fertigung und Montage des Befestigungsflansches, da die Durchgangsbohrung in einem Arbeitsgang mit der Fertigung des Getriebes und des Getriebegehäuses erfolgt. Weist das im Getriebegehäuse montierte Abtriebsritzel eine Durchgangsbohrung auf, durch die bei der Befestigung der Verstellvorrichtung der karosseriefeste Bolzen durchgeführt wird, werden die im Betrieb auftretenden Momente optimal vom Getriebe auf die Karosserie abgeführt. Bei einer Drehung der Verstellvorrichtung auf dem Bolzen ändert sich dann nur die Winkellage der Zahnstange, die durch eine weitere Anlagefläche ebenfalls festgelegt werden kann. Durch die in den Unteransprüchen aufgeführten Maßnahmen ergeben sich vorteilhafte Weiterbildungen und Verbesserungen der in den unabhängigen Ansprüchen angegebenen Merkmale.

Ist das Abtriebsritzel gemeinsam mit einem Schneckenrad als ein Bauteil ausgebildet, kann dieses Bauteil, das eine durchgängige Durchgangsbohrung aufweist, sehr günstig gefertigt und im Getriebegehäuse gelagert werden. Dabei werden sowohl die Kräfte vom Elektromotor über das Schneckengetriebe, als auch die über die Zahnstange einwirkenden Kräfte direkt vom karosseriefesten Bolzen innerhalb des Bauteils aufgenommen.

Aufgrund der Ausbildung der Durchgangsbohrung im Abtriebsritzel und im Schneckenrad, können diese nicht mehr fest mittels einer Welle innerhalb des Getriebegehäuses gelagert werden. Von Vorteil ist es daher am gemeinsamen Bauteil des Abtriebsritzel und des Schneckenrads eine radiale Lagerfläche anzuformen, die von einer zylindrischen Ausnehmung des Getriebegehäuses aufgenommen wird. Dadurch steht der Nabenbereich des Bauteils für die Durchgangsbohrung zur Verfügung.

Zur axialen Fixierung des Abtriebsritzels und des Schneckenrads im Getriebegehäuse sind an diesem zusätzlich axiale Anlaufflächen angeordnet, so dass bei einer Fixierung des Getriebegehäuses auf dem Bolzen, das Abtriebsritzel und das Schneckenrad ebenfalls axial fest gegenüber der Karosserie fixiert sind.

In einer vorteilhaften Ausführung besteht das Getriebegehäuse aus einem Grundkörper und einem Getriebedeckel, deren Trennfläche im wesentlichen quer zur Achse des Abtriebsritzels angeordnet ist. Durch eine solche Anordnung kann in einem Montageschritt das Getriebegehäuse fest verschlossen und das Abtriebsritzel und das Schneckenrad zuverlässig gelagert werden. Durch die Fertigung des Getriebegehäuses aus Kunststoff wird das Gesamtgewicht des Gurtbringers deutlich reduziert. Durch die Herstellung der Durchgangsbohrung mittels Spritzgießen in einem Arbeitsgang mit dem Getriebegehäuse, entfällt die relativ teuere Blechverarbeitung und Montage herkömmlicher Befestigungsflansche.

Durch die einteilige Ausbildung des Führungselements mit dem Getriebegehäuse kann das Abtriebsritzel besonders günstig von diesem Bauteil umschlossen und gelagert werden, so dass die Lagerung des Abtriebsritzels und der Zahnstange zueinander sehr stabil und verschleißfest ausgeführt werden kann und eine aufwändige Justierung des Abtriebsritzels gegenüber der Zahnstange bei der Montage entfällt.

Ist das Abtriebsritzel gemeinsam mit einem Schneckenrad als ein Bauteil ausgebildet, kann über das Schneckengetriebe der Elektromotor sowohl kraftschlüssig als auch mechanisch spielfrei am Getriebegehäuse befestigt werden. Durch die Befestigung des Schneckenrads auf dem karosseriefesten Bolzens entfällt daher eine separate Befestigung des relativ schweren Elektromotors.

Mittels der erfindungsgemäßen Befestigungsvorrichtung kann der Gurtbringer als sehr kompakte Einheit mit oder ohne eingeschobene Zahnstange zum Verkauf angeboten werden. Dabei ist keine separate Fertigung eines Befestigungsflansches und einer Führungsschiene für die Zahnstange notwendig, da der gesamte Gurtbringer direkt über die Durchgangsbohrung im Getriebegehäuse an der Karosserie befestigt wird.

Durch die drehbare Lagerung der Verstellvorrichtung auf dem Bolzen kann die Winkellage der Zahnstang bei Bedarf benutzerspezifisch angepasst werden.

Um eine bevorzugte Winkellage der Zahnstange einzustellen, wir vorteilhaft ein weiterer Stift an der Karosserie befestigt, an dem die Zahnstange oder die elektrische Antriebseinheit anliegt. Durch diesen Schleifkontakt entfällt ein Montageschritt für einen zusätzlichen Befestigungspunkt.

Zur axialen Fixierung der Verstellvorrichtung weist der Bolzen beispielsweise ein Gewinde auf, auf die nach dem Aufschieben des Getriebegehäuses eine Schraubenmutter aufgeschraubt wird. Alternativ können aber auch andere Sicherungselemente, wie Klemmringe, Splinte oder andere form- oder kraftschlüssige Verbindungsmittel verwendet werden.

### Zeichnungen

In der Zeichnung sind Ausführungsbeispiele erfindungsgemäßer Verstellvorrichtungen zum motorischen Bewegen eines Sicherheitsgurts dargestellt und in der nachfolgenden Beschreibung näher erläutert. Es zeigen
Fig. 1 einen erfindungsgemäßen, in eine Karosserie eingebauten Gurtbringer,
Fig. 2 und Fig. 3 zwei Ansichten der Verstellvorrichtung ohne Zahnstange,
Fig. 4 ein weiteres Ausführungsbeispiel eines Gurtbringers mit einer Befestigungsvorrichtung,
Fig. 5 einen Schnitt durch das Getriebegehäuse der Ausführung aus Fig. 4,
Fig. 6 die schematische Darstellung einer weiteren Befestigungsvorrichtung, und
Fig. 7 einen Gurtbringer nach dem Stand der Technik.

### Beschreibung der Ausführungsbeispiele

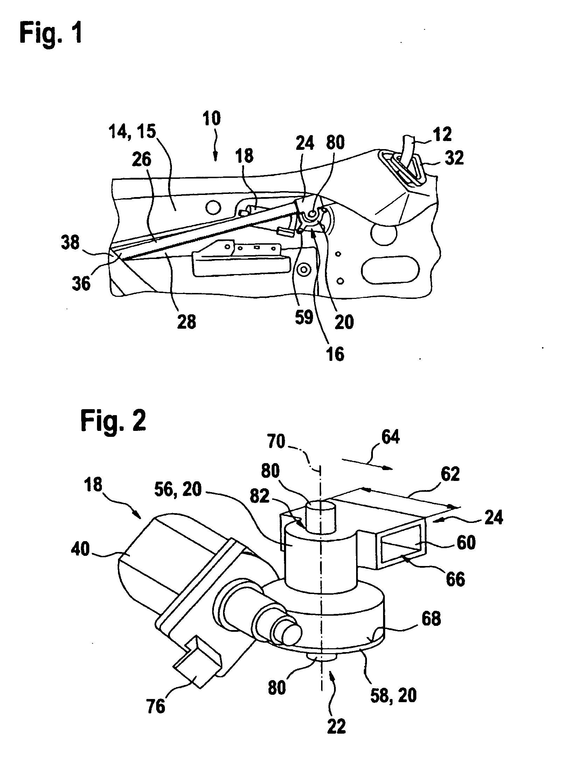

In Fig. 1 ist eine Verstellvorrichtung 10 zur motorischen Bewegung eines Sicherheitsgurts 12 dargestellt, die in eine Seitenwand 14 einer Karosserie 15 eingebaut ist, wie sie beispielsweise in einem Coupé, welches nur im Bereich der Vordersitze Türen aufweist, verwendet wird. Die Verstellvorrichtung 10 weist eine elektrische Antriebseinheit 16 mit einem Elektromotor 18 und einem in einem Getriebegehäuse 20 angeordneten Getriebe 22 auf. Die elektrische Antriebseinheit 16 weist eine Durchgangsbohrung 82 auf, die als Aufnahme für einen an der Karosserie befestigten Bolzen 80 dient, womit die Verstellvorrichtung 10 fest an der Seitenwand 14 montiert ist. Am Getriebegehäuse 20 ist als integrativer Bestandteil ein Führungselement 24 für eine Zahnstange 26 angeformt, die wie die Antriebseinheit 16 in einer Ausformung 28 der Seitenwand 14 angeordnet ist. An einem vorderen Ende 30 ist an der Zahnstange 26 eine Triangel 32 angeordnet, durch die der Sicherheitsgurt 12 hindurchgeführt ist. In der dargestellten Ruhestellung liegt die Zahnstange 26 mit einem hinteren Ende 36 an einem Anschlag 38 der Karosserie 15 an. Wird beispielsweise das Zündschloss des Kraftfahrzeugs betätigt, bewegt die Verstellvorrichtung 10 den Gurt 12 automatisch von hinten auf den Fahrer auf dem Fahrersitz zu, so dass dieser den Gurt 12 bequem erreichen kann.

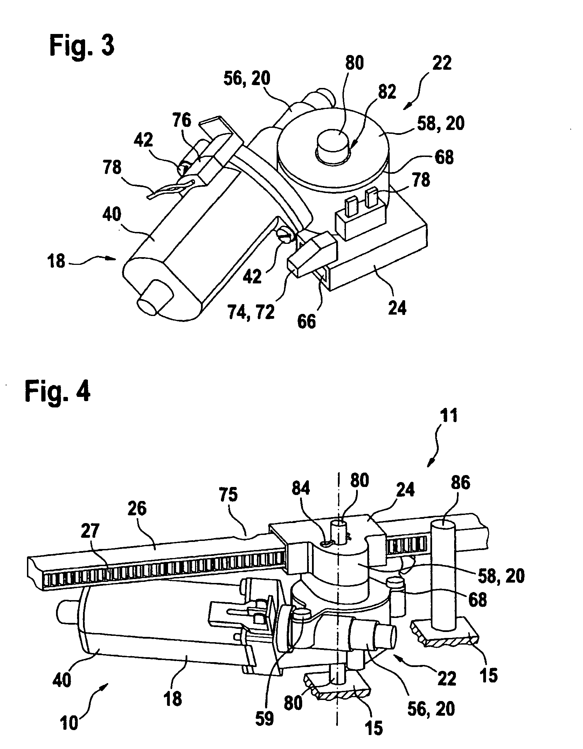

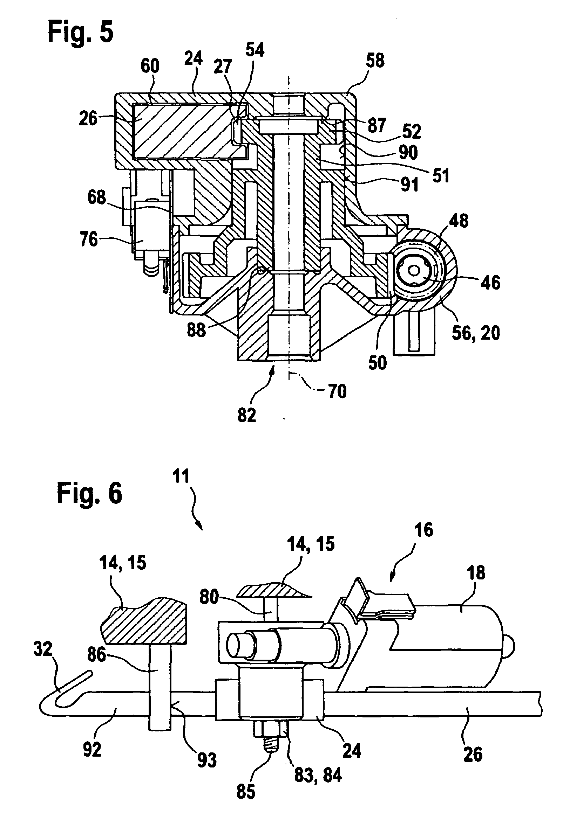

In Fig. 2 und 3 ist die elektrische Antriebseinheit 16 vergrößert dargestellt, wobei der Elektromotor 18 einen Poltopf 40 aufweist, der mittels Verbindungselementen 42, beispielsweise Schrauben 42 fest mit dem Getriebegehäuse 20 verbunden ist. Der Elektromotor 18 ist über eine auf einer Ankerwelle 46 angeordnete Schnecke 48 mit einem Schneckenrad 50 wirkverbunden, wie dies in Fig. 5 näher dargestellt ist. Das Schneckenrad 50 wiederum ist starr mit einem Abtriebsritzel 52 verbunden, das mit seiner Verzahnung 54 in die nicht näher dargestellte Zahnstange 26 greift. Das Getriebegehäuse 20 weist im Ausführungsbeispiel einen Grundkörper 56 auf, der sowohl die Ankerwelle 46 als auch das Schneckenrad 50 und das Abtriebsritzel 52 umschließt. Im Bereich des Abtriebsritzels 52 ist an das Getriebegehäuse einstückig das Führungselement 24 angeformt, das die Zahnstange 26 aufnehmen kann. Das Führungselement 24 weist ein im wesentlichen rechteckigen Querschnitt 60 auf und erstreckt sich über eine Länge 62, die in etwa der Abmessung des Getriebegehäuses 20 entlang der Längsrichtung 64 der Zahnstange 26 entspricht. Das Führungselement 24 weist an seinen beiden Enden Öffnungen 66 auf, durch die die Zahnstange 26 hindurchschiebbar ist. Das Getriebegehäuse 20 weist des weiteren einen Getriebedeckel 58 auf, um das Schneckenrad 50 abzuschließen, wobei eine Trenn-Ebene 68 zwischen dem Getriebedeckel 58 und dem Grundkörper 56 näherungsweise senkrecht zu einer Achse 70 des Antriebsritzels 52 und des Schneckenrads 50 angeordnet ist. Das Getriebegehäuse 20, das Antriebsritzel 52 und das Schneckenrad 50 weisen hierbei die Durchgangsbohrung 82 entlang der Achse 70 auf, in die der karosseriefeste Bolzen 80 eingeführt ist. Das Abtriebsritzel 52 ist hierbei vollständig innerhalb des Getriebegehäuses 20 gelagert. Das Getriebegehäuse 20 ist aus Kunststoff, vorzugsweise mittels Spritzgussverfahren gefertigt.

In Fig. 3 ist am Führungselement 24 als Positionserfassungsvorrichtung 72 ein Mikroschalter 74 angeordnet, der in entsprechende Schaltkerben 75 der Zahnstange 26 greift. Der Mikroschalter 74 ist ebenso wie ein Steckkontakt 76 am Elektromotor 18 mit nicht näher dargestellten elektrischen Anschlüssen 78 verbunden.

Fig. 4 zeigt ein weiteres Ausführungsbeispiel einer Befestigungsvorrichtung 11 eines Gurtbringers 10 mit einer im Führungselement 24 angeordneten Zahnstange 26. Die Zahnstange 26 ragt aus den beiden Öffnungen 66, wobei am vorderen Ende 30 der Zahnstange die Triangel 32 für den Gurt 12 angeordnet ist und das hintere Ende 36 gegen einen Anschlag 38 bewegbar ist. Das nicht näher sichtbare Abtriebsritzel 52 greift mit seiner Verzahnung 54 in die Zähne 27 der Zahnstange 26 ein, wobei der Abstand zwischen dem Abtriebsritzel 52 und der Zahnstange 26 durch das einteilig mit dem Getriebegehäuse 20 ausgebildete Führungselement 24 fest vorgegeben ist. Die Trenn-Ebene 68 zwischen dem Deckel 58 und dem Grundkörper 56 des Getriebegehäuses 20 liegt in diesem Ausführungsbeispiel zwischen dem Schneckenrad 50 und dem Abtriebsritzel 52. Die beiden Gehäuseteile 56, 58 sind mit Verbindungsmitteln 59 fest miteinander verbunden, so dass mit der fertigen Montage des Getriebegehäuses 20 auch die Zahnstange 26 kraftschlüssig mit dem Elektromotor 18 verbunden ist. Als Befestigungsvorrichtung 11 ist die Verstellvorrichtung 10 mittels des karosseriefesten Bolzen 80, der die Durchgangsbohrung 82 des Getriebegehäuses 20 durchdringt, mit der Seitenwand 14 verbunden. Zur axialen Fixierung der Verstellvorrichtung 10 ist diese mit einem Sicherungselement 84 auf dem Bolzen 80 fixiert. Da das Getriebegehäuse 20 gegenüber dem festen Bolzen 80 drehbar gelagert ist, ist ein weiterer karosseriefester Stift 86 vorgesehen, der die Winkellage der Verstellvorrichtung 10 fixiert.

In Fig. 5 ist ein vergrößerter Schnitt durch das Getriebegehäuse in Fig. 4 gemäß der Linie V-V dargestellt. Das Abtriebselement 52 ist hierbei einteilig mit dem Schneckenrad 50 ausgebildet, die beide von der zentralen Durchgangsbohrung 82 durchdrungen sind, die zur Befestigung Verstellvorrichtung 10 mittels des karosseriefesten Bolzens 80 dient. Das Schneckenrad 50 und die Ankerwelle 46 sind im wesentlichen von einem ersten Getriebegehäuseteil 56 umschlossen, und das Abtriebsritzel 52 ist vom zweiten Getriebegehäuseteil 58, in den das Führungselement 24 integriert ist, umschlossen. Das Abtriebsritzel 52 und das Schneckenrad 50 bilden ein gemeinsames Bauteil 51, das vollständig im Getriebegehäuse 20 gelagert ist. Hierzu weist das Getriebegehäuse 20 axiale Anlaufflächen 87, 88 auf, an denen das Antriebsritzel 52 und das Schneckenrad 50 zur axialen Lagerung anliegen. Die radiale Lagerung des Bauteils 51 erfolgt über eine Umfangsfläche 90, die in einer entsprechenden zylindrischen Ausformung 91 im Getriebegehäuse 20 geführt ist. Die Verzahnung 54 des Abtriebsritzels 52 weist hierbei einen definierten Abstand zu den Zähnen 27 der Zahnstange 26 auf. Zur Befestigung des Getriebegehäuses 20 wird dieses mit der Durchgangsbohrung 82, die das Getriebegehäuse 20 und das Bauteil 51 durchdringt, auf den karosseriefesten Bolzen 80 geschoben.

Fig. 6 zeigt eine weitere schematische Darstellung der Befestigungsvorrichtung 11 der Verstellvorrichtung 10 zur Bewegung des Gurts 12. Der Bolzen 80 und der Stift 86 sind in der Aussparung 28 der Karosserie drehfest befestigt, beispielsweise angeschweißt. Zur Montage des Gurtbringers 10 wird die Antriebseinheit 16 mit der eingefügten Zahnstange 26 auf den Bolzen 80 geschoben. Dieser weist an seinem freien Ende ein Gewinde 85 auf, auf das anschließend eine Gewindemutter 83 zur axialen Fixierung der Verstellvorrichtung 10 angeordnet wird. Der Stift 86 ist zwischen dem Bolzen 80 und der Triangel 32 derart angeordnet, dass die Zahnstange 26 mit einer Anlagefläche 92 an einer Gegenanlagefläche 93 des karosseriefesten Stifts 86 anliegt. Im Ruhezustand wird die Zahnstange dadurch bei eingefügtem Sicherheitsgurt 12 in einer festen Winkellage gehalten. Alternativ kann der Gurtbringer 10 auch an einer Anlagefläche 92 des Getriebegehäuses 20 oder des Führungselements 24 anliegen.

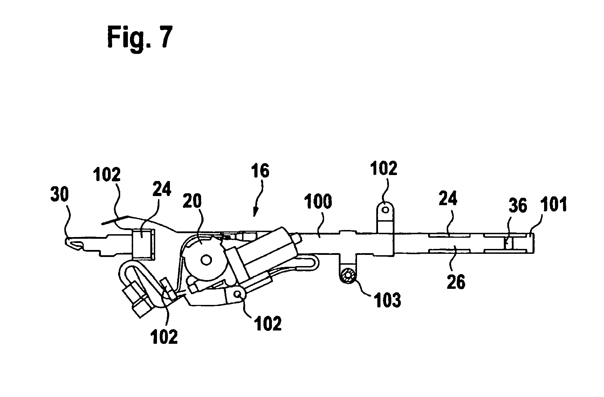

In Fig. 7 ist als Stand der Technik ein herkömmlicher Gurtbringer 10 dargestellt. Hierbei ist die Antriebseinheit 16 an einem Befestigungsflansch 100 angeschraubt, der wiederum am Führungselement 24 der Zahnstange 26 befestigt ist. Das Führungselement 24 erstreckt sich hierbei im wesentlichen über die gesamte Länge der Zahnstange 26. An einem Ende des Führungselements 24 ist ein Anschlagpuffer 101 angeordnet, um eine elastische Dämpfung beim Anfahren des hinteren Endes 36 der Zahnstange 26 gegen den Anschlag 38 zu erzielen. Der Befestigungsflansch 100 weist mehrere Aufnahmen 102 für Verbindungselemente 103 auf, mit dem der Gurtbringer 10 an der Karosserie 15 justiert und befestigt werden kann. Zur Montage wird hierbei zuerst der Befestigungsflansch 100 am Führungselement 24 angeformt - beispielsweise mittels Materialumformung - , und anschließend das Getriebegehäuse 20 derart mit dem Befestigungsflansch 100 verbunden, dass das Abtriebsritzel 52, das in diesem Fall aus dem Getriebegehäuse 20 ragt, in die Zähne 27 der Zahnstange 26 greift.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann beispielsweise die konkrete Ausgestaltung des Getriebegehäuses 20, des Führungselements 24, des Getriebes 22, des Motors 18 und der Befestigungsbolzen- und Stifte 80, 86 variiert werden, wobei erfindungswesentlich ist, dass die Durchgangsbohrung 82 das Getriebegehäuse 20 durchdringt. So kann das Führungselement 24 beispielsweise auch als separates Bauteil ausgebildet sein, und das Abtriebsritzel axial außerhalb des Getriebegehäuses 20 angeordnet sein. Die Erfindung umfasst auch eine Verstellvorrichtung 10 ohne die Montage der Zahnstange 26 und kann sinngemäß auch für ähnliche lineare Verstellanwendungen, insbesondere im Kraftfahrzeug, verwendet werden.

## Patentansprüche

1. Verstellvorrichtung (10) zum motorischen Bewegen eines Sicherheitsgurts (12), mit einem in einem Getriebegehäuse (20) angeordneten Getriebe (22), das ein Abtriebsritzel (52) aufweist, wobei das Abtriebsritzel (52) mit einer Zahnstange (26) kämmt, die in Längsrichtung (64) durch ein Führungselement (24) der Verstellvorrichtung (10) durchschiebbar ist, **dadurch gekennzeichnet, dass** das Getriebegehäuse (20) eine Durchgangsbohrung (82) aufweist, die zur Befestigung der Verstellvorrichtung (10) von einem karosseriefesten Bolzen (80) in einem Kraftfahrzeug durchdringbar ist, wobei die Durchgangsbohrung (82) das Abtriebsritzel (52) axial durchdringt.

2. Verstellvorrichtung (10) nach Anspruch 1, **dadurch gekennzeichnet, dass** das Führungselement (24) als separates Bauteil ausgebildet ist, und das Abtriebsritzel (52) axial außerhalb des Getriebegehäuses (20) angeordnet ist.

3. Verstellvorrichtung (10) nach einem der Ansprüche 1 oder 2, **dadurch gekennzeichnet, dass** das Abtriebsritzel (52) einteilig mit einem axial versetzt angeordneten Schneckenrad (50) ausgebildet ist, das ebenfalls axial von der Durchgangsbohrung (82) durchdrungen ist.

4. Verstellvorrichtung (10) nach einem der vorhergehenden Ansprüche, **dadurch gekennzeichnet, dass** das Abtriebsritzel (52) und das Schneckenrad (50) über mindestens eine äußere Umfangsfläche (90) radial im Getriebegehäuse (20) gelagert sind.

5. Verstellvorrichtung (10) nach einem der vorhergehenden Ansprüche, **dadurch gekennzeichnet, dass** das Getriebegehäuse (20) mindestens zwei axiale Anlaufflächen (87, 88) aufweist, an denen sich das Abtriebsritzel (52) und das Schneckenrad (50) axial abstützten.

6. Verstellvorrichtung (10) nach einem der vorhergehenden Ansprüche, **dadurch gekennzeichnet, dass** das Getriebegehäuse (20) einen Grundkörper (56) und einen Getriebedeckel (58) aufweist, die miteinander fest verbindbar sind und aus Kunststoff - insbesondere mittels Spritzgußverfahren - hergestellt sind.

7. Verstellvorrichtung (10) nach einem der vorhergehenden Ansprüche, **dadurch gekennzeichnet, dass** das Führungselement (28) integrativer Bestandteil des Getriebegehäuses (20) ist.

8. Verstellvorrichtung (10) nach einem der vorhergehenden Ansprüche, **dadurch gekennzeichnet, dass** das Schneckenrad (50) über eine Schneckenwelle (48, 46) mit einem Elektromotor (18) wirkverbunden ist, der fest mit dem Getriebegehäuse (20) verbunden ist.

9. Befestigungsvorrichtung (11) für einen Gurtbringer **mit einer Verstellvorrichtung (10) nach einem der Ansprüche 1 bis 8, dadurch gekennzeichnet, dass** ein karosseriefester Bolzen (80) die im Getriebegehäuse (20) der Verstellvorrichtung (10) angeordnete Durchgangsbohrung (82) durchdringt.

10. Befestigungsvorrichtung (11) nach Anspruch 9, **dadurch gekennzeichnet, dass** das Getriebegehäuse (20) drehbar auf dem karosseriefesten Bolzen (80) gelagert ist.

11. Befestigungsvorrichtung (11) nach einem der Ansprüche 9 oder 10, **dadurch gekennzeichnet, dass** nach der Montage der Verstellvorrichtung (10) auf den karosseriefesten Bolzen (80) die Verstellvorrichtung (10) mit einem Sicherungselement (84) axial fixiert wird - insbesondere mittels einer Schraubenmutter (84), die auf einem Gewinde des karosseriefesten Bolzens (80) angeordnet wird.

12. Befestigungsvorrichtung (11) nach einem der Ansprüche 9 bis 11, **dadurch gekennzeichnet, dass** zur Ausrichtung der Winkellage der Verstellvorrichtung (10) diese - insbesondere an der Zahnstange (26) - eine Anlagefläche (92) aufweist, die mit einer korrespondierenden karosseriefesten - insbesondere an einem weiteren karosseriefestem Stift (86) angeordneten - Gegenanlagefläche (93) zusammenwirkt.

13. Verfahren zum Befestigen einer Verstellvorrichtung (10) zum motorischen Bewegen eines Sicherheitsgurts (12) in einem Kraftfahrzeug nach einem der Ansprüche 1 bis 8, wobei die Verstellvorrichtung (10) ein Getriebe (22) mit einem Getriebegehäuse (20) aufweist, **dadurch gekennzeichnet, dass** zuerst ein Bolzen (80) fest an einer Karosserie (15) des Kraftfahrzeugs befestigt wird, danach die Verstellvorrichtung (10) mit einer das Getriebe (22) und das Getriebegehäuse (20) durchringende Durchgangsbohrung (82) auf den Bolzen (80) aufgeschoben wird, und dann die Verstellvorrichtung (10) mit einem Sicherungselement (84) axial auf dem Bolzen (80) fixiert wird.

## Claims

1. Adjusting apparatus (10) for the motorized movement of a safety belt (12), having a gear mechanism (22) which is arranged in a gear-mechanism housing (20) and has an output pinion (52), the output pinion (52) meshing with a rack (26) which can be pushed through a guide element (24) of the adjusting apparatus (10) in the longitudinal direction (64), **characterized in that** the gear-mechanism housing (20) has a through hole (82) which, in order to fasten the adjusting apparatus (10), can be penetrated by a bolt (80) which is fixed to the body in a motor vehicle, the through hole (82) penetrating the output pinion (52) axially.

2. Adjusting apparatus (10) according to Claim 1, **characterized in that** the guide element (24) is configured as a separate component, and the output pinion (52) is arranged axially outside the gear-mechanism housing (20).

3. Adjusting apparatus (10) according to either of Claims 1 and 2, **characterized in that** the output pinion (52) is configured integrally with a worm gear (50) which is arranged in an axially offset manner and is likewise penetrated axially by the through hole (82).

4. Adjusting apparatus (10) according to one of the preceding claims, **characterized in that** the output pinion (52) and the worm gear (50) are mounted radially in the gear-mechanism housing (20) via at least one outer circumferential face (90).

5. Adjusting apparatus (10) according to one of the preceding claims, **characterized in that** the gear-mechanism housing (20) has at least two axial run-on faces (87, 88), on which the output pinion (52) and the worm gear (50) are supported axially.

6. Adjusting apparatus (10) according to one of the preceding claims, **characterized in that** the gear-mechanism housing (20) has a basic body (56) and a gear-mechanism cover (58) which can be connected to one another fixedly and are produced from plastic, in particular by means of injection-moulding processes.

7. Adjusting apparatus (10) according to one of the preceding claims, **characterized in that** the guide element (28) is an integrative constituent part of the gear-mechanism housing (20).

8. Adjusting apparatus (10) according to one of the preceding claims, **characterized in that** the worm gear (50) is operatively connected via a worm shaft (48, 46) to an electric motor (18) which is connected fixedly to the gear-mechanism housing (20).

9. Fastening apparatus (11) for a seat-belt offering system **having an adjusting apparatus (10) according to one of Claims 1 to 8**, **characterized in that** a bolt (80) which is fixed to the vehicle body penetrates the through hole (82) which is arranged in the gear-mechanism housing (20) of the adjusting apparatus (10).

10. Fastening apparatus (11) according to Claim 9, **characterized in that** the gear-mechanism housing (20) is mounted rotatably on the bolt (80) which is fixed to the vehicle body.

11. Fastening apparatus (11) according to either of Claims 9 and 10, **characterized in that**, after the adjusting apparatus (10) is mounted onto the bolt (80) which is fixed to the vehicle body, the adjusting apparatus (10) is fixed axially by way of a securing element (84), in particular by means of a threaded nut (84) which is arranged on a thread of the bolt (80) which is fixed to the vehicle body.

12. Fastening apparatus (11) according to one of Claims 9 to 11, **characterized in that**, in order to align the angular position of the adjusting apparatus (10), the latter has, in particular on the rack (26), a contact face (92) which interacts with a corresponding mating contact face (93) which is fixed to the vehicle body and is arranged, in particular, on a further pin (86) which is fixed to the vehicle body.

13. Method for fastening an adjusting apparatus (10) for the motorized movement of a safety belt (12) in a motor vehicle according to one of Claims 1 to 8, the adjusting apparatus (10) having a gear mechanism (22) with a gear-mechanism housing (20), **characterized in that** first of all a bolt (80) is fastened fixedly to a body (15) of the motor vehicle, subsequently the adjusting apparatus (10) is pushed onto the bolt (80) by way of a through hole (82) which penetrates the gear mechanism (22) and the gear-mechanism housing (20), and then the adjusting apparatus (10) is fixed axially on the bolt (80) by way of a securing element (84).

## Revendications

1. Dispositif de réglage (10) pour le déplacement motorisé d'une ceinture de sécurité (12), comprenant une transmission (22) disposée dans un boîtier de transmission (20), qui présente un pignon de sortie (52), le pignon de sortie (52) s'engrenant avec une crémaillère (26) qui peut être poussée dans la direction longitudinale (64) à travers un élément de guidage (24) du dispositif de réglage (10), **caractérisé en ce que** le boîtier de transmission (20) présente un alésage traversant (82) qui peut être traversé pour la fixation du dispositif de réglage (10) par un boulon (80) fixé à la carrosserie dans un véhicule automobile, l'alésage traversant (82) traversant axialement le pignon de sortie (52).

2. Dispositif de réglage (10) selon la revendication 1, **caractérisé en ce que** l'élément de guidage (24) est réalisé sous forme de composant séparé et le pignon de sortie (52) est disposé axialement en dehors du boîtier de transmission (20).

3. Dispositif de réglage (10) selon l'une quelconque des revendications 1 ou 2, **caractérisé en ce que** le pignon de sortie (52) est réalisé d'une seule pièce avec une roue à denture hélicoïdale (50) disposée de manière décalée axialement, qui est également traversée axialement par l'alésage traversant (82).

4. Dispositif de réglage (10) selon l'une quelconque des revendications précédentes, **caractérisé en ce que** le pignon de sortie (52) et la roue à denture hélicoïdale (50) sont montés radialement dans le boîtier de transmission (20) par le biais d'au moins une surface périphérique extérieure (90).

5. Dispositif de réglage (10) selon l'une quelconque des revendications précédentes, **caractérisé en ce que** le boîtier de transmission (20) présente au moins deux surfaces de butée axiales (87, 88) sur lesquelles s'appuient axialement le pignon de sortie (52) et la roue à denture hélicoïdale (50).

6. Dispositif de réglage (10) selon l'une quelconque des revendications précédentes, **caractérisé en ce que** le boîtier de transmission (20) présente un corps de base (56) et un couvercle de transmission (58), qui peuvent être connectés fixement l'un à l'autre et qui sont fabriqués en plastique, en particulier au moyen d'un procédé de moulage par injection.

7. Dispositif de réglage (10) selon l'une quelconque des revendications précédentes, **caractérisé en ce que** l'élément de guidage (28) est un composant intégral du boîtier de transmission (20).

8. Dispositif de réglage (10) selon l'une quelconque des revendications précédentes, **caractérisé en ce que** la roue à denture hélicoïdale (50) est connectée fonctionnellement par le biais d'un arbre de vis sans fin (48, 46) à un moteur électrique (18) qui est connecté fixement au boîtier de transmission (20).

9. Dispositif de fixation (11) pour un enrouleur de ceinture comprenant un dispositif de réglage (10) selon l'une quelconque des revendications 1 à 8, **caractérisé en ce qu'**un boulon (80) fixé à la carrosserie traverse l'alésage traversant (82) disposé dans le boîtier de transmission (20) du dispositif de réglage (10).

10. Dispositif de fixation (11) selon la revendication 9, **caractérisé en ce que** le boîtier de transmission (20) est monté de manière rotative sur le boulon (80) fixé à la carrosserie.

11. Dispositif de fixation (11) selon l'une quelconque des revendications 9 ou 10, **caractérisé en ce qu'**après le montage du dispositif de réglage (10) sur le boulon (80) fixé à la carrosserie, le dispositif de réglage (10) est fixé axialement avec un élément de fixation (84) - notamment au moyen d'un écrou de vis (84), qui est disposé sur un filetage du boulon (80) fixé à la carrosserie.

12. Dispositif de fixation (11) selon l'une quelconque des revendications 9 à 11, **caractérisé en ce que** pour l'orientation de la position angulaire du dispositif de réglage (10), celui-ci, notamment sur la crémaillère (26), présente une surface d'appui (92) qui coopère avec une surface d'appui conjuguée (93) correspondante fixée à la carrosserie, notamment disposée sur une autre goupille (86) fixée à la carrosserie.

13. Procédé pour la fixation d'un dispositif de réglage (10) pour le déplacement motorisé d'une ceinture de sécurité (12) dans un véhicule automobile selon l'une quelconque des revendications 1 à 8, dans lequel le dispositif de réglage (10) présente une transmission (22) avec un boîtier de transmission (20), **caractérisé en ce que** l'on fixe d'abord un boulon (80) fixement à une carrosserie (15) du véhicule automobile, puis le dispositif de réglage (10) avec un alésage traversant (82) traversant la transmission (22) et le boîtier de transmission (20) est poussé sur le boulon (80) et ensuite le dispositif de réglage (10) est fixé axialement sur le boulon (80) avec un élément de fixation (84).
